# EUROPÄISCHE PATENTSCHRIFT

(11) **EP 1 316 699 B1**
(45) Veröffentlichungstag und Bekanntmachung des Hinweises auf die Patenterteilung: **09.02.2005**
(21) Anmeldenummer: 02024729.2
(22) Anmeldetag: 06.11.2002
(51) Int. Cl.: F02B 37/10, F02C 6/12

(54) **Abgasturbolader für eine Brennkraftmaschine und Verfahren zum Betrieb einer aufgeladenen Brennkraftmaschine**
Turbocharger for an internal combustion engine and method for operating a turbocharged internal combustion engine
Turbocompresseur pour moteur à combustion interne et méthode de fonctionnement d'un moteur à combustion interne turbocompressé

(30) Priorität: 30.11.2001 DE 10158874
(43) Veröffentlichungstag der Anmeldung: 04.06.2003
(73) Patentinhaber: DaimlerChrysler AG, 70567 Stuttgart (DE)
(72) Erfinder: Fledersbacher, Peter, 70619 Stuttgart (DE); Schunk, Aloysius, 70736 Fellbach (DE); Sumser, Siegfried, 70184 Stuttgart (DE)

(56) Entgegenhaltungen:
- DE-C- 19 823 274
- US-A- 3 462 071
- US-A- 3 921 403
- US-A- 4 689 960
- US-B1- 6 182 449

## Beschreibung

Die Erfindung bezieht sich auf einen Abgasturbolader für eine Brennkraftmaschine und auf ein Verfahren zum Betrieb einer aufgeladenen Brennkraftmaschine nach dem Oberbegriff des Anspruches 1 bzw. 10.

In der Druckschrift DE-OS 28 08 147 wird ein Abgasturbolader mit einer von den Motorabgasen beaufschlagten Abgasturbine und einem von der Abgasturbine angetriebenen Verdichterrad beschrieben, welcher angesaugte Verbrennungsluft auf einen erhöhten Ladedruck verdichtet, unter dem die Verbrennungsluft den Zylindereinlässen der Brennkraftmaschine zugeführt wird. In den Abgasturbolader ist ein Elektromotor integriert, dessen Anker auf der Laderwelle zwischen Turbinen- und Verdichterrad sitzt, so dass bei einer Betätigung des Elektromotors die Laderwelle zusätzlich angetrieben wird, wodurch der Verdichter insbesondere in Betriebszuständen der Brennkraftmaschine mit geringem Abgasausstoß zusätzliche Verdichterarbeit zur Erzeugung eines höheren Ladedruckes leistet. Hierdurch kann bereits in Betriebszuständen der Brennkraftmaschine ein erhöhter Ladedruck erzeugt werden, in denen die Abgasenergie noch nicht ausreicht, den Turbolader auf eine entsprechende Drehzahl zu beschleunigen.

Einen Elektromotor anzuordnen, bedeutet jedoch einen zusätzlichen Konstruktions- und Teile- sowie Montageaufwand.

Nachteilig ist auch, dass der die Laderwelle umgreifende Anker des Elektromotors ein zusätzliches Gewicht darstellt, welches von dem Abgasturbolader bei abgeschaltetem Elektromotor mitbeschleunigt werden muss, wodurch der Wirkungsgrad des Laders verschlechtert wird.

Mit Unterstützungsmaßnahmen wie beispielsweise dem vorbeschriebenen Elektromotor können zwar im niedrigen Lastbereich bereits höhere Ladedrücke erreicht werden. Andererseits ist der Verdichterarbeitsbereich durch die sogenannte Pumpgrenze im Verdichterkennfeld begrenzt, welches den Arbeitsbereich des Verdichters mittels des Druckverhältnisses von Ausgangsdruck zu Eingangsdruck am Verdichter in Abhängigkeit vom Luftmassendurchsatz durch den Verdichter beschreibt. Die Pumpgrenze stellt hierbei eine begrenzende Kennlinie dar, welche das Leistungsvermögen des Verdichters im Bereich niedrigen Massendurchsatzes bei zugleich hohem Ausgangsdruck - dies entspricht einem Betriebszustand der Brennkraftmaschine bei hoher Last und niedriger Drehzahl - begrenzt. Bei einem Betrieb nahe der Pumpgrenze bilden sich örtlich begrenzte Zonen mit abreißender Strömung aus, woraufhin ein periodisches Pulsieren der Strömung mit einem Wechsel der Strömungsrichtung und damit einhergehender Geräuschentwicklung auftritt. Zur Vergrößerung des Arbeitsbereiches des Verdichters, insbesondere in Bereichen hoher Last und niedriger Drehzahl, ist man daher bestrebt, die Pumpgrenze zu Gunsten kleinerer Massendurchsätze zu verschieben.

Zur Verschiebung der Pumpgrenze können Kennfeld-Stabilisierungsmaßnahmen vorgesehen sein, die beispielsweise einen Bypass im Verdichtergehäuse umfassen, welcher einen Abschnitt des Einströmkanals im Verdichter im Bereich der Verdichterrad-Eintrittskante überbrückt. Eine derartige Maßnahme wird in der Druckschrift DE 198 23 274 C1 beschrieben. Wird der Verdichter nahe der Pumpgrenze betrieben, ermöglicht der Bypass eine gerichtete Rezirkulation eines Teilmassenstromes entgegen der Förderrichtung. Der rückgeführte Teilmassenstrom tritt im Eintrittsbereich des Verdichters wieder in den Einströmkanal ein und wird gemeinsam mit dem Hauptstrom wieder angesaugt.

Die Druckschrift US 3 462 071 zeigt einen Abgasturbolader für eine Brennkraftmaschine, deren Verdichter eine Zusatzluft-Einspeisungseinrichtung zugeordnet ist, über die in bestimmten Betriebsphasen der Brennkraftmaschine dem Verdichterrad zur Unterstützung der Kompressionsleistung Zusatzluft zugeführt wird. Diese Zusatzluft wird über eine externe Quelle, beispielsweise einen zusätzlichen Kompressor erzeugt und über eine Zusatzleitung im Verdichtergehäuse auf die Verdichterradschaufeln geführt, wodurch diese mit einem zusätzlichen, antreibenden Drall beaufschlagt werden. Zur Verbesserung der Drallwirkung sind die Öffnungen, über die die Zusatzluft dem Verdichterrad zuzuführen ist, als Luftschlitze ausgeführt, wodurch eine Düsenwirkung mit erhöhten Strömungsgeschwindigkeiten erzielt wird.

Die auf den Verdichter über die einzuspeisende Zusatzluft übertragbare Zusatzleistung wird über die Höhe des Luftmassenstroms eingestellt, beispielsweise durch Regelung der zusätzlichen Kompressoreinheit, welche den erforderlichen Druck für die Zusatzluft erzeugt, wobei die Leistung der zusätzlichen Kompressoreinheit als Funktion des angeforderten Drucks starken Schwankungen unterworfen ist. Dies bedingt einen erheblichen Regelungsaufwand. Von diesem Stand der Technik ausgehend liegt der Erfindung das Problem zugrunde, die Leistung einer Brennkraftmaschine mit einfachen konstruktiven, den Abgasturbolader betreffenden Maßnahmen zu steigern. Es soll insbesondere mit einfachen Maßnahmen der Arbeitsbereich eines Abgasturboladers vergrößert werden.

Dieses Problem wird erfindungsgemäß bei einem Abgasturbolader mit den Merkmalen des Anspruches 1 und bei einem Verfahren zum Betrieb einer Brennkraftmaschine mit einem Abgasturbolader mit den Merkmalen des Anspruches 10 gelöst. Die Unteransprüche geben zweckmäßige Weiterbildungen an.

Der Abgasturbolader verfügt über eine Zusatzluft-Einspeisungseinrichtung, welche einen Zusatzluftkanal im Verdichtergehäuse umfasst, über den Zusatzluft über eine Einblasöffnung in der Wandung des Einströmkanals in den Anströmbereich des Verdichterrades einzuleiten ist. Die in den Anströmbereich des Verdichterrades eingeblasene Zusatzluft beeinflusst die Pumpgrenze zu Gunsten niedrigerer Massendurchsätze bei zugleich hohem Verdichterdruckverhältnis, indem die zusätzlich eingeblasene Luft Strömungsgrenzschichten an der Außenkontur des Verdichterrades mit einem Strömungsimpuls beaufschlagt, welcher die Grenzschichten in der vorgesehenen Strömungsrichtung weiterbewegt, wodurch eine für das Pumpverhalten typische Umkehr der Geschwindigkeitsrichtung der Strömung vermieden wird bzw. zu Gunsten eines größeren Arbeitsbereiches verschoben wird. Die Einblasung bietet darüber hinaus den weiteren Vorteil, dass das Verdichterrad über die eingeblasene Luft zusätzlich angetrieben wird, was einen schnelleren Anstieg der Turboladerdrehzahl bewirkt, als dies ohne Einblasung oder sonstige Fremdhilfe der Fall wäre. Der erhöhte Ladedruck hilft zum einen, bei niedriger Last/Drehzahl der Brennkraftmaschine das unerwünschte Turboloch zu vermeiden und sorgt für einen schnellen und ruckfreien Anstieg während der Beschleunigungsphase. Zum anderen ermöglicht die zusätzliche Einblasung von Luft auch im oberen Luft- und Drehzahlbereich der Brennkraftmaschine eine Leistungssteigerung.

Die Einblasöffnung für die Zufuhr der Zusatzluft in den Einströmkanal befindet sich in einem Bereich stromauf der Verdichterrad-Anströmseite bis geringfügig stromab der angeströmten Stirnfläche des Verdichterrades, jedoch noch stromauf derjenigen Abschnitte des Verdichterrades, in denen bereits eine Verdichtung der Verbrennungsluft stattfindet.

In zweckmäßiger Weiterbildung ist ein mit dem Zusatzluftkanal verbundener, den Einströmkanal radial umgreifender Ringraum vorgesehen, der über die Einblasöffnung mit dem Einströmkanal kommuniziert. Der Ringraum dient als Sammelraum für die in das Verdichtergehäuse eingeleitete Zusatzluft, aus dem über die Einblasöffnung bzw. die Einblasöffnungen die Luft in den Einströmkanal geleitet wird. Der Ringraum wirkt druckstoßkompensierend, wodurch eine Einspeisung der Zusatzluft mit gleichmäßigem Druck gewährleistet ist.

Vorteilhaft sind eine Mehrzahl von Einblasöffnungen über den Umfang des Einströmkanales verteilt angeordnet, wodurch eine gleichmäßige Luftzufuhr zum Verdichterrad gewährleistet ist. Anstelle von mehreren einzelnen Einblasöffnungen kann es auch zweckmäßig sein, die Einblasöffnung als ringförmigen Schlitz in der Wandung des Einströmkanales auszubilden, über den der Zusatzluftkanal bzw. der Ringraum mit dem Einströmkanal verbunden ist.

In der Einblasöffnung ist ein Drallgitter angeordnet, welches die einströmende Zusatzluft mit einem Drall beaufschlagt, vorteilhaft mit einem in Drehrichtung des Rades liegenden Mitdrall, um den Antrieb des Verdichterrades in optimaler Weise zu verstärken. Das Drallgitter ist als verstellbares Leitgitter ausgeführt, über das der freie Strömungseintrittsquerschnitt zum Einströmkanal variabel einstellbar ist, beispielsweise über verstellbare Leitschaufeln.

Zusätzlich zu dem Drallgitter kann die Einblasöffnung als Ringdüse ausgeführt sein bzw. eine derartige Ringdüse in die Einblasöffnung integriert sein. Auch in dieser kostengünstigen Ausführung kann eine Mitdrallströmung der eingeblasenen Zusatzluft erzeugt werden, insbesondere für den Fall, dass der Ringraum einen sich in Umfangsrichtung verjüngenden Querschnitt aufweist.

Der Ringraum weist zweckmäßig einen in Umfangsrichtung gleich bleibenden Querschnitt auf. Gegebenenfalls ist aber auch ein sich verjüngender Querschnitt des Ringraumes möglich.

Der Abgasturbolader ist zweckmäßig mit einer Rezirkulationseinrichtung ausgestattet, die die Funktion einer kennfeldstabilisierenden Maßnahme einnimmt. Die Rezirkulationseinrichtung umfasst einen Bypass zum Einströmkanal, welcher insbesondere die Einblasöffnung für die Zusatzluftzufuhr überbrückt und eine Rezirkulationsöffnung stromab der Einblasöffnung und eine Rückführöffnung stromauf der Einblasöffnung aufweist. Über die Rezirkulationseinrichtung wird ein Teilmassenstrom der herangeführten Verbrennungsluft entgegen der Hauptströmungsrichtung zurückgeführt und über die Rückführöffnung wieder in den Einströmkanal eingeleitet.

Vorteilhaft ist der Zusatzluftkanal mit einem Zusatzluftspeicher verbunden, der seinerseits mit einem Kompressor mit Luft zu versorgen sein kann, welcher zweckmäßig von der Brennkraftmaschine angetrieben wird. Der Zusatzluftspeicher kann über die Einspeisung von Zusatzluft in den Anströmbereich des Verdichterrades hinaus weitere Funktionen übernehmen, insbesondere zu Beginn einer Beschleunigungsphase der Brennkraftmaschine zusätzlich Verbrennungsluft in den Ansaugtrakt stromab des Verdichters einspeisen, um in diesem Betriebsbereich zusätzlich zu der vom Verdichter gelieferten Ladeluft weitere Verbrennungsluft mit erhöhtem Druck zur Verfügung zu stellen.

Bei dem erfindungsgemäßen Verfahren wird in Beschleunigungsphasen des Motors Zusatzluft in den Anströmbereich des Verdichterrades im Verdichter-Einströmkanal eingespeist, wobei die Lufteinspeisung zweckmäßig in den Fällen durchgeführt wird, in welchen die Laderdrehzahl des Abgasturboladers einen Schwellenwert erreicht bzw. überschreitet, oberhalb dem aufgrund der rapide angestiegenen Turbinenleistung akute Pumpgefahr im Verdichter besteht. Über die Einblasung der Zusatzluft wird die Pumpgefahr beseitigt bzw. reduziert und zudem das Verdichterrad zusätzlich angetrieben. Unterhalb des Laderdrehzahl-Schwellenwertes kann es zweckmäßig sein, Zusatzluft unmittelbar in den Ansaugtrakt stromab des Verdichters einzuspeisen, um auf diese Weise für einen erhöhten Ladedruck zu sorgen.

Die Lufteinspeisung unmittelbar in den Ansaugtrakt stromab des Verdichters wird zweckmäßig für den Fall abgebrochen, dass der Ladedruck im Ansaugtrakt einen Sollwert erreicht. Zugleich oder alternativ kann die Lufteinspeisung in den Einströmkanal des Verdichters auf ein Maß reduziert werden, welches einen gewünschten Ladedruck-Sollwert ermöglicht.

Zur Entlastung des Zusatzluftspeichers kann verdichtete Luft aus dem Ansaugtrakt stromab des Verdichters in den Anströmbereich des Verdichterrades im Einströmkanal rückgeführt werden, wodurch zumindest teilweise Unabhängigkeit von der Verfügbarkeit an Zusatzluft im Zusatzluftspeicher erreicht wird.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer aufgeladenen Brennkraftmaschine, wobei der Verdichter des Abgasturboladers mit einer Zusatzluft-Einspeisungseinrichtung verbunden ist,
- Fig. 2: einen Schnitt durch den Verdichter des Abgasturboladers in einer ersten Ausführung,
- Fig. 3: einen Schnitt durch den Verdichter des Abgasturboladers in einer zweiten Ausführung,
- Fig. 4: eine Seitenansicht des Verdichters nach Fig. 2,
- Fig. 5: ein Schaubild mit dem zeitabhängigen Verlauf des zusätzlich eingespeisten Luftmassenstromes in den Ansaugtrakt stromab des Verdichters sowie in den Einströmkanal des Verdichters,
- Fig. 6: ein Schaubild mit dem Verdichterdruckverhältnis in Abhängigkeit des reduzierten, auf Normverhältnisse bezogenen Massendurchsatzes durch den Verdichter.

In den folgenden Figuren sind gleiche Bauteile mit gleichen Bezugszeichen versehen.

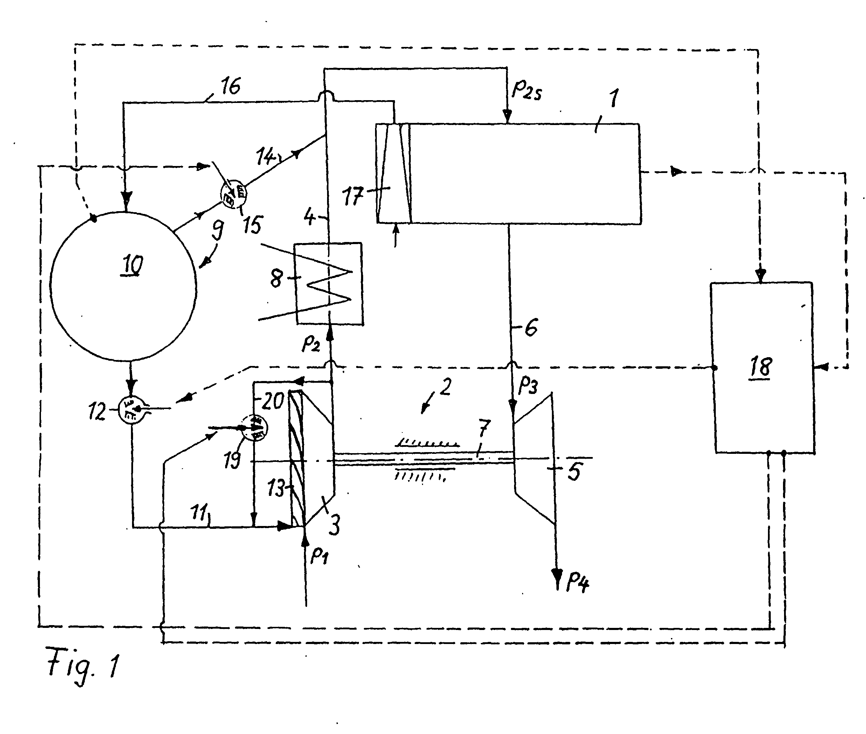

Der in Fig. 1 dargestellten Brennkraftmaschine 1 - ein OttoMotor oder eine Diesel-Brennkraftmaschine - ist ein Abgasturbolader 2 mit einem Verdichter 3 im Ansaugtrakt 4 und einer Abgasturbine 5 im Abgasstrang 6 zugeordnet, wobei die Abgasturbine 5 von den Abgasen der Brennkraftmaschine 1 angetrieben wird und die Drehbewegung des Turbinenrades über eine Laderwelle 7 auf ein Verdichterrad im Verdichter 3 übertragen wird. Der Verdichter saugt daraufhin Umgebungsluft unter dem Umgebungsdruck p₁ an und verdichtet die Luft auf einen erhöhten Druck, unter dem die Luft zunächst in einem Ladeluftkühler 8 gekühlt wird und anschließend mit dem Ladedruck p_{2S} den Zylindereinlässen der Brennkraftmaschine 1 zugeführt wird. Abgasseitig verlassen die Abgase die Brennkraftmaschine 1 unter dem Abgasgegendruck *p*₃, unter dem die Abgase der Abgasturbine 5 zugeführt werden. Nach dem Verlassen der Abgasturbine 5 nehmen die Abgase den entspannten Druck p₄ ein und werden im weiteren Verlauf nach einer nachgeschalteten Reinigung in die Atmosphäre abgeblasen.

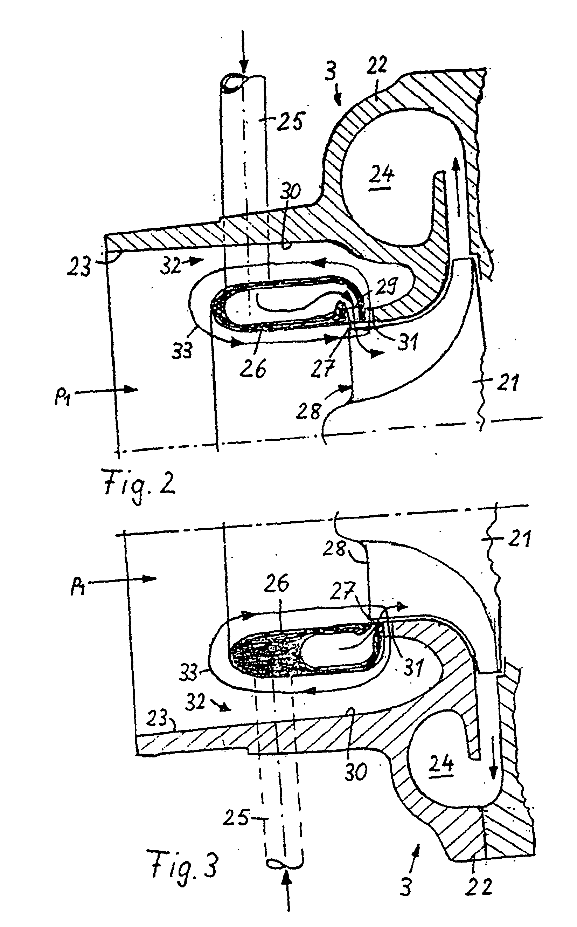

Dem Abgasturbolader 2 bzw. der Brennkraftmaschine 1 ist eine Zusatzluft-Einspeisungseinrichtung 9 zugeordnet, welche einen Zusatzluftspeicher 10 mit Pressluft umfasst, der über eine Verbindungsleitung 11, in welcher sich ein einstellbares Ventil 12 befindet, mit dem Einströmkanal des Verdichters 3 verbunden ist. In Öffnungsstellung des Ventils 12 wird unter Überdruck stehende Zusatzluft aus dem Zusatzluftspeicher 10 zusätzlich zu der vom Verdichter angesaugten Umgebungsluft in den Einströmkanal des Verdichters eingeblasen. Die Einblasstelle befindet sich, wie im Einzelnen in den Fig. 2 und 3 dargestellt, im Anströmbereich des Verdichterrades. Zweckmäßig befindet sich in der Einblasöffnung, über die die Zusatzluft in den Einströmkanal des Verdichters 3 eingeblasen wird, ein Drallgitter 13.

Der Zusatzluftspeicher 10 ist über eine weitere Verbindungsleitung 14, in welcher ein einstellbares Ventil 15 angeordnet ist, mit dem Ansaugtrakt 4 stromab des Verdichters 3 und des Ladeluftkühlers 8 verbunden. Über eine weitere Verbindungsleitung 16 wird der Zusatzluftspeicher 10 von einem Kompressor 17 mit Pressluft versorgt. Der Kompressor 17 wird vorteilhaft von der Brennkraftmaschine 1 angetrieben und verdichtet angesaugte Atmosphärenluft.

Über eine Regel- und Steuereinheit 18 werden die der Brennkraftmaschine 1 zugeordneten, einstellbaren Aggregate in Abhängigkeit von Zustands- und Betriebsgrößen der Brennkraftmaschine eingestellt. Dies betrifft insbesondere die Ventile 12 und 15 der Zusatzluft-Einspeisungseinrichtung 9 sowie ein weiteres Ventil 19 in einer Bypassleitung 20, welche vom Abströmbereich des Verdichters 3 abzweigt und verdichtete Luft in den Einströmkanal des Verdichters zurückführt.

Der in Fig. 2 dargestellte Verdichter 3 weist ein Verdichterrad 21 in einem Verdichtergehäuse 22 auf, wobei das Verdichterrad 21 über einen Einströmkanal 23 im Verdichtergehäuse, welcher koaxial zum Verdichterrad ausgerichtet ist, mit Verbrennungsluft versorgt wird, die unter dem Umgebungsdruck p₁ steht. Die zugeführte Verbrennungsluft wird bei einer Rotation des Verdichterrades 21 verdichtet und radial über einen Abströmkanal 24 im Verdichtergehäuse 22 in Richtung der Zylindereinlässe der Brennkraftmaschine eingeleitet.

Der Verdichter 3 ist mit einer Zusatzluft-Einspeisungseinrichtung verbunden, welche einen Zusatzluftkanal 25 umfasst, über den Zusatzluft in den Anströmbereich des Verdichterrades 21 bei Bedarf eingeblasen werden kann. Der Zusatzluftkanal 25 ist mit dem in Fig. 1 dargestellten Zusatzluftspeicher 10 bzw. der vom Zusatzluftspeicher 10 abzweigenden Verbindungsleitung 11 verbunden. Der Zusatzluftkanal 25 ist in das Verdichtergehäuse 22 integriert und verläuft radial zum Einströmkanal 23, über den der Hauptmassenstrom der Verbrennungsluft zuführbar ist. Der Zusatzluftkanal 25 mündet in einen Ringraum 26, welcher im radial außenliegenden Bereich des Einströmkanals 23 angeordnet und gegenüber diesem druckdicht verschlossen ist und einen radial inneren Abschnitt des Einströmkanals umschließt, über den der Hauptmassenstrom der Verbrennungsluft dem Verdichterrad zuführbar ist. Der Ringraum 26 erstreckt sich axial bis über die Anströmseite des Verdichterrades 21 und umgreift dieses radial. In der Ausführung gemäß Fig. 2 besitzt der Ringraum 26 einen in Achsrichtung gleich bleibenden Querschnitt. Der Ringraum 26 ist über eine Einblasöffnung 27 auf der radial innen liegenden Seite des Ringraumes mit dem Einströmkanal 23 verbunden. Die Einblasöffnung 27 befindet sich im Anströmbereich des Verdichterrades 21, benachbart zur Anström-Stirnseite des Verdichterrades, jedoch geringfügig axial stromab der Anström-Stirnseite. Die Einblasöffnung 27 liegt radial unmittelbar benachbart zum Umfang des Verdichterrades 21.

In der Einblasöffnung 27 befindet sich ein Drallgitter 29, welches die durch die Einblasöffnung in Richtung Turbinenrad 21 strömende Zusatzluft mit einem Drall beaufschlagt, insbesondere mit einem Mitdrall, der in Drehrichtung des Turbinenrades 21 gerichtet ist. Das Drallgitter 29 ist als verstellbares Leitgitter, beispielsweise mit verstellbaren Leitschaufeln, ausgeführt, das zur Veränderung des Dralls der einströmenden Zusatzluft verschiedene Stellungen einnehmen kann.

Der Verdichter 3 ist mit einer Rezirkulationseinrichtung versehen, über die in Arbeitsbereichen des Verdichters nahe der Pumpgrenze eine entgegen der Hauptströmung gerichtete Rezirkulationsströmung eines Teilluftmassenstromes aus dem Anströmbereich des Verdichterrades in einen vorgelagerten Bereich im Einströmkanal 23 zurückgeführt werden kann. Die Rezirkulationseinrichtung umfasst einen Bypass 30, der parallel zum Einströmkanal 23 verläuft und diesen insbesondere radial umgreift, gegebenenfalls aber auch einen abgetrennten Abschnitt des Einströmkanals 23 bilden kann. Der Bypass 30 ist über eine stromab der Einblasöffnung 27 angeordnete Rezirkulationsöffnung 31 mit dem Einströmkanal 23 im Anströmbereich 28 zum Verdichterrad 21 verbunden. Stromauf des Anströmbereiches 28 kommuniziert der Bypass 30 über eine Rückführöffnung 32 mit einem weiter stromauf gelegenen Abschnitt des Einströmkanals 23. Über die Öffnungen 31 und 32 kann sich im Bypass 30 die mit Bezugszeichen 33 gekennzeichnete Rückströmung ausbilden.

Im Ausführungsbeispiel nach Fig. 3 weist der Ringraum 26 einen sich über den Umfang in Richtung Einblasöffnung 27 verjüngenden Querschnitt auf. In die Einblasöffnung 27 kann eine Ringdüse eingesetzt sein bzw. die Einblasöffnung 27 selbst kann als Ringdüse ausgeführt sein.

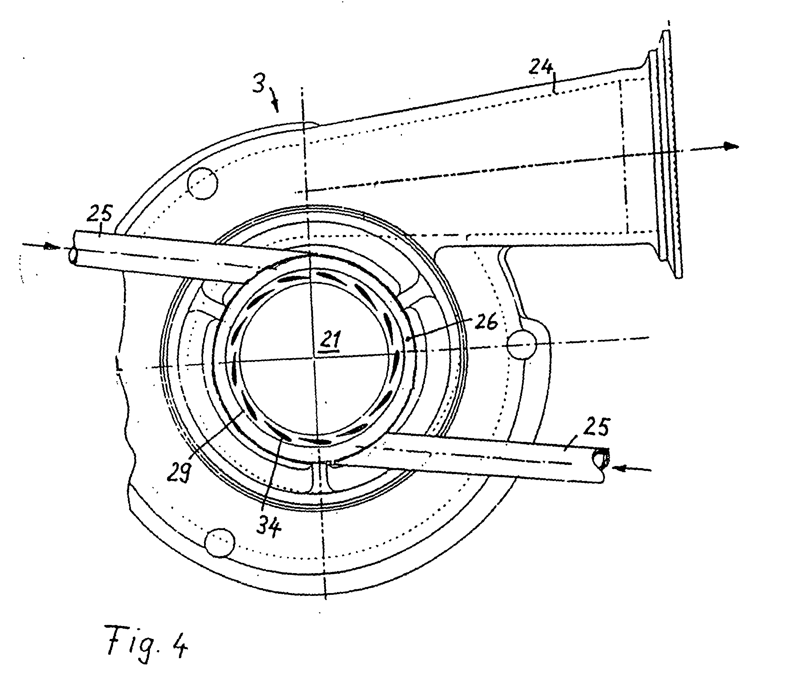

Der in Fig. 4 dargestellten Seitenansicht auf den Verdichter 3 ist zu entnehmen, dass im Verdichter zwei Zusatzluftkanäle 25 angeordnet sind, welche sich diametral gegenüber liegen und tangential in den Ringraum 26 einmünden, über den über die Einblasöffnungen eingeführte Zusatzluft zunächst auf das Drallgitter 29 und anschließend auf das Verdichterrad 21 geführt wird. Das Drallgitter 29 ist als Leitgitter mit Leitschaufeln 34 ausgebildet, welche einen Mitdrall der einströmenden Zusatzluft in Drehrichtung des Verdichterrades 21 erzeugen. Die Leitschaufeln 34 sind verstellbar ausgeführt .

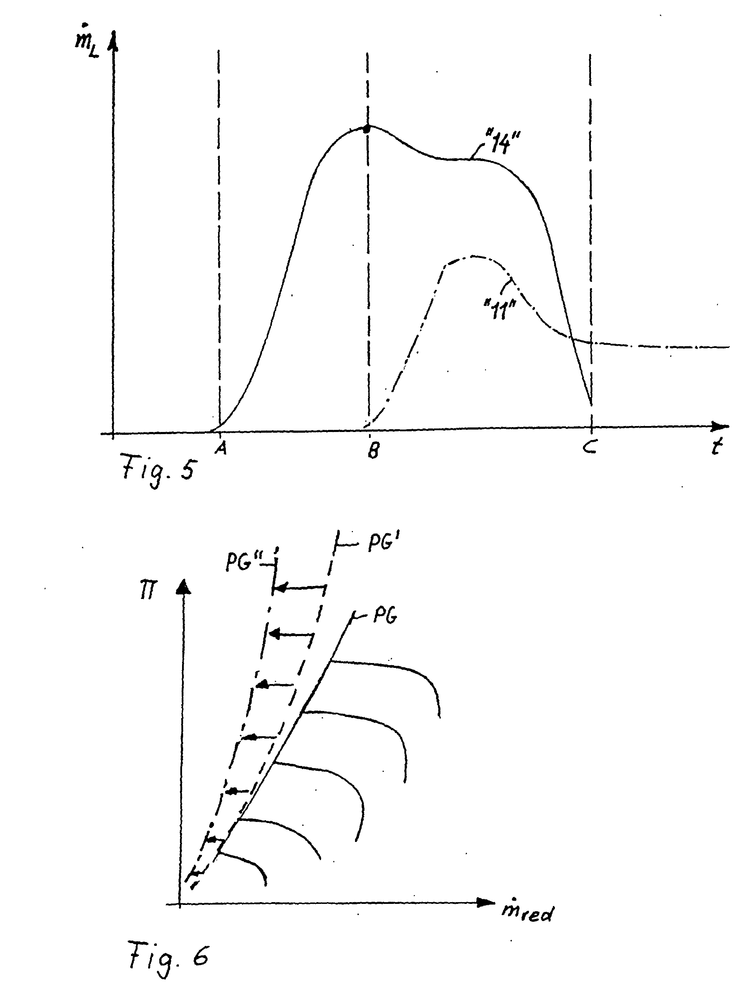

Das Verfahren zur Einspeisung der Zusatzluft in den Verdichter-Anströmbereich kann anhand des Schaubildes nach Fig. 5 beschrieben werden, in welchem der Luftmassenstrom *ṁ*_{*L*} aus der Zusatzluft-Einspeisungseinrichtung über die in Fig. 1 dargestellten Verbindungsleitungen 11 - in den Anströmbereich des Verdichters - und 14 - stromab des Verdichters unmittelbar in den Ansaugtrakt - zeitabhängig dargestellt sind. In Fig. 1 ist der Luftmassenstrom durch die Verbindungsleitung 11 mit strichpunktierter Linie und der Luftmassenstrom durch die Verbindungsleitung 14 mit durchgezogener Linie dargestellt.

Bis zu einem ersten Zeitpunkt A befindet sich die Brennkraftmaschine zunächst in einem Teillastbetrieb, in welchem nur ein geringer Abgasgegendruck erzeugt und dementsprechend auch nur eine verhältnismäßig geringe Laderleistung generiert wird, bei der noch keine Gefahr des Verdichterpumpens besteht. Bis zum Zeitpunkt A bleiben daher die Ventile für die Einspeisung der Zusatzluft in den Verdichter-Anströmbereich und unmittelbar in den Ansaugtrakt stromab des Verdichters zunächst geschlossen.

Zwischen den Zeitpunkten A und B befindet sich die Brennkraftmaschine in einer ersten Beschleunigungsphase, ausgehend von dem Teillastbetrieb. Zum Zeitpunkt A wird zunächst das Ventil für die Einblasung der Zusatzluft unmittelbar in den Ansaugtrakt geöffnet, wodurch ein erhöhter Ladedruck, unabhängig von der Verdichtertätigkeit, erzeugt wird. Dementsprechend steigt der Luftmassenstrom "14" an. In diesem Betriebsbereich bleibt das Ventil zur Steuerung der Einblasung der Zusatzluft in den Verdichteranströmbereich zunächst noch geschlossen.

Im Zeitpunkt B wird das Ventil für die Zusatzlufteinspeisung in den Verdichter geöffnet, der Luftmassenstrom "11" steigt an. Als Kriterium für die Einblasung der Zusatzluft in den Verdichter kann das Erreichen eines den Betriebszustand der Brennkraftmaschine bzw. des Abgasturboladers kennzeichnenden Schwellenwerts herangezogen werden, beispielsweise eines Schwellenwertes für die Laderdrehzahl.

Zwischen den Zeitpunkten B und C befindet sich die Brennkraftmaschine immer noch in einer Beschleunigungsphase, in der gemäß der strichpunktierten Linie "11" die Zusatzluft unmittelbar in den Verdichterradanströmbereich eingeblasen wird. Die Einblasung sorgt einerseits für einen zusätzlichen Drall des Verdichterrades und anderseits für eine Verschiebung der Pumpgrenze, wodurch ein größerer Arbeitsbereich des Verdichters nutzbar wird. Zeitgleich mit der Einblasung der Zusatzluft in den Verdichter kann die unmittelbar stromab des Verdichters in den Ansaugtrakt eingeblasene Zusatzluft "14" reduziert werden.

Ab dem Zeitpunkt C erreicht die Brennkraftmaschine einen näherungsweise stationären Betriebspunkt. Das Ventil für die unmittelbare Einspeisung der Zusatzluft in den Ansaugtrakt stromab des Verdichters wird nun geschlossen, siehe Kennlinie "14". Die Einblasung der Zusatzluft auf das Verdichterrad wird gedrosselt und auf einem konstanten Wert gehalten, siehe Kennlinie "11".

In dem in Fig. 6 dargestellten Verdichterkennfeld ist die Wirkungsweise sowohl der Rezirkulationseinrichtung im Verdichter als auch der Zusatzlufteinblasung auf das Verdichterrad auf die Pumpgrenze dargestellt. In dem Verdichterkennfeld ist das Totaldruckverhältnis, welches das Verhältnis des Verdichter-Ausgangsdruckes zum Verdichter-Eingangsdruck kennzeichnet, in Abhängigkeit des reduzierten Referenzmassenstromes *ṁ*_{*red*} der Verbrennungsluft durch den Verdichter dargestellt, wobei der Referenzmassenstrom *ṁ*_{*red*} auf einen Referenzdruck sowie eine Referenztemperatur unter Normalbedingungen bezogen ist. Mit durchgezogenem Strich in die Basispumpgrenze PG dargestellt, welche mit Hilfe der Rezirkulationseinrichtung, über die ein Teilmassenstrom der zugeführten Verbrennungsluft entgegen der Hauptströmungsrichtung im Einströmkanal des Verdichters zurückzuführen ist, zu Gunsten eines größeren Arbeitsbereiches des Verdichters in Richtung der Ordinate des Schaubildes verschoben ist und den mit strichlierter Linie eingetragenen Verlauf PG' einnimmt, der eine größere Steigung als die Pumpgrenze PG ohne Rezirkulationseinrichtung aufweist. Die größere Steigung der Pumpgrenze PG' ermöglicht es, im Volllastbereich der Brennkraftmaschine höhere Ladedrücke zu erzeugen.

Mittels der Lufteinblasung unmittelbar auf das Verdichterrad kann eine weitere Verschiebung der Pumpgrenze bis zu dem mit strichpunktierter Linie dargestellten Verlauf PG" erzielt werden. Die Pumpgrenze PG" weist einen noch steileren Verlauf auf als die Basispumpgrenze PG bzw. die Pumpgrenze PG', welche durch den Einsatz der Rezirkulationseinrichtung zu erzielen ist. Insbesondere in Kombination von Rezirkulationseinrichtung und Lufteinblasung auf das Verdichterrad kann somit ein deutlich vergrößerter Arbeitsbereich des Verdichters eingestellt werden.

## Patentansprüche

1. Abgasturbolader für eine Brennkraftmaschine, mit einer Abgasturbine (5) im Abgasstrang (6) und einem Verdichter (3) im Ansaugtrakt (4), wobei der Verdichter (3) ein Verdichterrad (21) in einem Einströmkanal (23) im Verdichtergehäuse (22) umfasst, und mit einer dem Verdichterbereich zugeordneten Zusatzluft-Einspeisungseinrichtung (9), die einen Zusatzluftkanal (25) im Verdichtergehäuse (22) für die Zuführung von Zusatzluft umfasst, welche über eine Einblasöffnung (27) in der Wandung des Einströmkanals (23) des Verdichters (3) in den Anströmbereich (28) des Verdichterrades (21) einzuleiten ist,
**dadurch gekennzeichnet,**
**dass** in der Einblasöffnung (27) ein als verstellbares Leitgitter ausgebildetes Drallgitter (29) angeordnet ist, welches die auf das Verdichterrad (21) auftreffende Zusatzluft mit einem Drall beaufschlagt.

2. Abgasturbolader nach Anspruch 1,
**dadurch gekennzeichnet,**
**dass** ein mit dem Zusatzluftkanal (25) kommunizierender Ringraum (26) vorgesehen ist, der über die Einblasöffnung (27) mit dem Einströmkanal (23) verbunden ist und den Einströmkanal (23) radial umgreift.

3. Abgasturbolader nach Anspruch 2,
**dadurch gekennzeichnet,**
**dass** der Zusatzluftkanal (25) tangential in den Ringraum (26) mündet.

4. Abgasturbolader nach einem der Ansprüche 1 bis 3,
**dadurch gekennzeichnet,**
**dass** die Einblasöffnung (27) als umlaufende Ringöffnung ausgeführt ist.

5. Abgasturbolader nach einem der Ansprüche 1 bis 3,
**dadurch gekennzeichnet,**
**dass** die Einblasöffnung (27) eine Mehrzahl einzelner, über den Umfang des Einströmkanals (23) verteilter Öffnungen umfasst.

6. Abgasturbolader nach einem der Ansprüche 1 bis 5,
**dadurch gekennzeichnet,**
**dass** die Zusatzluft-Einspeisungseinrichtung (9) einen Zusatzluftspeicher (10) umfasst, der mit dem Zusatzluftkanal (25) verbunden ist.

7. Abgasturbolader nach einem der Ansprüche 1 bis 6,
**dadurch gekennzeichnet,**
**dass** der Zusatzluftkanal (25) über eine Verbindungsleitung (11), in der ein einstellbares Ventil (12) angeordnet ist, mit dem Verdichter-Anströmbereich (28) verbunden ist.

8. Abgasturbolader nach einem der Ansprüche 1 bis 7,
**dadurch gekennzeichnet,**
**dass** in der Wandung des Einströmkanals (23) zum Verdichterrad (21) stromab der Einblasöffnung (27) eine Rezirkulationsöffnung (31) angeordnet ist, die mit einem Bypass (30) zum Einströmkanal (23) verbunden ist, der eine Rückführöffnung (32) in den Einströmkanal (23) stromauf der Verdichterrad-Eintrittskante und stromauf der Einblasöffnung (27) aufweist.

9. Brennkraftmaschine mit einem Abgasturbolader nach Anspruch 6,
**dadurch gekennzeichnet,**
**dass** der Zusatzluftspeicher (10) über eine Verbindungsleitung (14) mit dem Ansaugtrakt (4) stromab des Verdichters (3) verbunden ist, wobei in der Verbindungsleitung (14) ein einstellbares Ventil (15) angeordnet ist.

10. Verfahren zum Betrieb einer Brennkraftmaschine mit einem Abgasturbolader nach einem der Ansprüche 1 bis 8, bei dem in Beschleunigungsphasen des Motors Zusatzluft in den Anströmbereich (28) des Verdichterrades (21) im Verdichter-Einströmkanal (23) eingespeist wird.

11. Verfahren nach Anspruch 10,
**dadurch gekennzeichnet,**
**dass** die Lufteinspeisung in den Anströmbereich (28) des Verdichterrades (21) durchgeführt wird, wenn die Laderdrehzahl einen Schwellenwert erreicht.

12. Verfahren nach Anspruch 10 oder 11,
**dadurch gekennzeichnet,**
**dass** die Lufteinspeisung in den Anströmbereich (28) des Verdichterrades (21) auf einen einen vorgegebenen Ladedruck-Sollwert im Ansaugtrakt (4) haltenden Wert eingestellt wird.

13. Verfahren nach einem der Ansprüche 10 bis 12,
**dadurch gekennzeichnet,**
**dass** in einer ersten Beschleunigungsphase vor dem Einspeisen der Zusatzluft in den Anströmbereich (28) des Verdichterrades (21) zunächst Zusatzluft in den Ansaugtrakt (4) stromab des Verdichters (3) eingeblasen wird.

14. Verfahren nach Anspruch 13,
**dadurch gekennzeichnet,**
**dass** die Lufteinspeisung in den Ansaugtrakt (4) stromab des Verdichters (3) abgebrochen wird, wenn der Ladedruck im Ansaugtrakt (4) einen Ladedruck-Sollwert erreicht.

15. Verfahren nach einem der Ansprüche 10 bis 14,
**dadurch gekennzeichnet,**
**dass** Luft aus dem Ansaugtrakt (4) stromab des Verdichters (3) in den Anströmbereich (28) des Verdichterrades (21) im Verdichter-Einströmkanal (23) eingespeist wird.

## Claims

1. Exhaust gas turbocharger for an internal combustion engine, with an exhaust gas turbine (5) in the exhaust line (6) and a compressor (3) in the intake duct (4), the compressor (3) comprising an impeller (21) in an inlet channel (23) of the compressor housing (22), and with an auxiliary air feed device (9) associated with the compressor zone comprising an auxiliary air intake channel (25) in the compressor housing (22) for the intake of auxiliary air, which is passed via an injection aperture (27) in the wall of the inlet channel (23) of the compressor (3) into the inflow zone (28) of the impeller (21),
**characterised in that**
in the injection aperture (27) there is arranged a spiral grid (29) formed as an adjustable guide baffle, which imparts a twisting motion to the auxiliary air that flows onto the impeller (21).

2. Exhaust gas turbocharger according to Claim 1,
**characterised in that**
an annular space (26) that communicates with the auxiliary air intake channel (25) is provided, which is connected via the injection aperture (27) to the inlet channel (23) and which surrounds the inlet channel (23) radially.

3. Exhaust gas turbocharger according to Claim 2,
**characterised in that**
the auxiliary air intake channel (25) opens tangentially into the annular space (26).

4. Exhaust gas turbocharger according to any of Claims 1 to 3,
**characterised in that**
the injection aperture (27) is formed as a variable annular aperture.

5. Exhaust gas turbocharger according to any of Claims 1 to 3,
**characterised in that**
the injection aperture (27) comprises a plurality of individual openings distributed around the periphery if the inlet channel (23).

6. Exhaust gas turbocharger according to any of Claims 1 to 5,
**characterised in that**
the auxiliary air feed device (9) comprises an auxiliary air feed (10) connected to the auxiliary air intake channel (25).

7. Exhaust gas turbocharger according to any of Claims 1 to 6,
**characterised in that**
the auxiliary air intake channel (25) is connected to the compressor inflow zone (28) via a connecting duct (11) in which an adjustable valve is arranged.

8. Exhaust gas turbocharger according to any of Claims 1 to 7,
**characterised in that**
in the wall of the inlet channel (23) a recirculation opening (31) to the impeller (21) is arranged downstream from the injection aperture (27) and is connected with a bypass to the inlet channel (23), which comprises a return opening (32) in the inlet channel (23) upstream from the compressor inlet rim and upstream from the injection aperture (27).

9. Internal combustion engine having an exhaust gas turbocharger according to Claim 6,
**characterised in that**
the auxiliary air feed (10) is connected via a connection duct (14) to the intake duct (4) downstream from the compressor (3), and an adjustable valve (15) is arranged in the said connection duct (14).

10. Method for operating an internal combustion engine with an exhaust gas turbocharger according to any of Claims 1 to 8, in which during acceleration phases of the engine auxiliary air is fed into the inflow zone (28) of the impeller (21) in the compressor inlet channel (23).

11. Method according to Claim 10,
**characterised in that**
air is fed into the inflow zone (28) of the impeller (21) when the turbocharger rotation speed reaches a threshold value.

12. Method according to Claims 10 or 11,
**characterised in that**
the air feed into the inflow zone (28) of the impeller (21) is adjusted so as to maintain a predetermined nominal boost pressure value in the intake duct (4).

13. Method according to any of Claims 10 to 12,
**characterised in that**
during a first acceleration phase before auxiliary air is fed into the inflow zone (28) of the impeller (21), auxiliary air is first blown into the intake duct (4) downstream from the compressor (3).

14. Method according to Claim 13,
**characterised in that**
the air feed into the intake duct (4) downstream from the compressor (3) is interrupted when the boost pressure in the intake duct (4) reaches a nominal boost pressure value.

15. Method according to any of Claims 10 to 14,
**characterised in that**
air is fed from the intake duct (4) downstream from the compressor (3) into the compressor inlet channel (23) in the inflow zone (28) of the impeller (28).

## Revendications

1. Turbocompresseur à gaz d'échappement pour un moteur à combustion interne, comportant une turbine à gaz d'échappement (5) agencée dans le circuit des gaz d'échappement (6) et un compresseur (3) agencé dans le circuit d'aspiration (4), le compresseur (3) comprenant une roue (21) dans un canal d'entrée (23) dans le boîtier de compresseur (22), et comportant un dispositif d'alimentation en air supplémentaire (9) qui est associé à la zone de compression et qui comprend un canal à air supplémentaire (25) dans le boîtier de compresseur (22) pour l'alimentation en air supplémentaire qui doit être introduit dans la zone d'afflux (28) de la roue de compresseur (21) via une ouverture d'insufflation (27) dans la paroi du canal d'entrée (23) du compresseur (3),
**caractérisé en ce que**
une grille à effet giratoire (29) réalisée sous forme de grille directrice réglable est agencée dans l'ouverture d'insufflation (27), grille qui impose un effet giratoire à l'air supplémentaire arrivant sur la roue de compresseur (3).

2. Turbocompresseur à gaz d'échappement selon la revendication 1, **caractérisé en ce qu'**il est prévu une chambre annulaire (26) communiquant avec le canal à air supplémentaire (25), qui est reliée au canal d'entrée (23) via l'ouverture d'insufflation (27) et qui entoure radialement le canal d'entrée (23).

3. Turbocompresseur à gaz d'échappement selon la revendication 2, **caractérisé en ce que** le canal à air supplémentaire (25) débouche tangentiellement dans la chambre annulaire (26).

4. Turbocompresseur à gaz d'échappement selon l'une des revendications 1 à 3, **caractérisé en ce que** l'ouverture d'insufflation (27) est réalisée sous forme d'ouverture annulaire périphérique.

5. Turbocompresseur à gaz d'échappement selon l'une des revendications 1 à 3, **caractérisé en ce que** l'ouverture d'insufflation (27) comprend une pluralité d'ouvertures individuelles réparties sur la périphérie du canal d'entrée (23).

6. Turbocompresseur à gaz d'échappement selon l'une des revendications 1 à 5, **caractérisé en ce que** le dispositif d'alimentation en air supplémentaire (9) comprend un réservoir à air supplémentaire (10) qui est relié au canal à air supplémentaire (25).

7. Turbocompresseur à gaz d'échappement selon l'une des revendications 1 à 6, **caractérisé en ce que** le canal à air supplémentaire (25) est relié à la zone d'afflux de compresseur (28) via une conduite de liaison (11) dans laquelle est agencée une valve réglable (12).

8. Turbocompresseur à gaz d'échappement selon l'une des revendications 1 à 7, **caractérisé en ce qu'**il est prévu dans la paroi du canal d'entrée (23) vers la roue de compresseur (21), en aval de l'ouverture d'insufflation (27), une ouverture de recirculation (31) qui est reliée à un by-pass (30) vers le canal d'entrée (23), qui présente une ouverture de retour (32) dans le canal d'entrée (23) en amont de l'arête d'entrée de roue de compresseur et en amont de l'ouverture d'insufflation (27).

9. Moteur à combustion interne comportant un turbocompresseur à gaz d'échappement selon la revendication 6, **caractérisé en ce que** le réservoir à air supplémentaire (10) est relié au circuit d'aspiration (4) en aval du compresseur (3) via une conduite de liaison (14), une valve réglable (15) étant agencée dans la conduite de liaison (14).

10. Procédé de fonctionnement d'un moteur à combustion interne comportant un turbocompresseur à gaz d'échappement selon l'une des revendications 1 à 8, dans lequel, pendant les phases d'accélération du moteur, de l'air supplémentaire est alimenté dans la zone d'afflux (28) de la roue de compresseur (21) dans le canal d'entrée de compresseur (23).

11. Procédé selon la revendication 10, **caractérisé en ce que** l'alimentation en air dans la zone d'afflux (28) de la roue de compresseur (21) est effectuée lorsque la vitesse de rotation du compresseur atteint une valeur seuil.

12. Procédé selon l'une ou l'autre des revendications 10 et 11, **caractérisé en ce que** l'alimentation en air dans la zone d'afflux (28) de la roue de compresseur (21) est réglée à une valeur qui maintient une valeur de consigne prédéterminée de pression de suralimentation dans le circuit d'aspiration (4).

13. Procédé selon l'une des revendications 10 à 12, **caractérisé en ce que** dans une première phase d'accélération, avant l'alimentation en air supplémentaire dans la zone d'afflux (28) de la roue de compresseur (21), de l'air supplémentaire est tout d'abord insufflé dans le circuit d'aspiration (4) en aval du compresseur (3).

14. Procédé selon la revendication 13, **caractérisé en ce que** l'alimentation en air dans le circuit d'aspiration (4) en aval du compresseur (3) est interrompue lorsque la pression de suralimentation dans le circuit d'aspiration (4) atteint une valeur de consigne de pression de suralimentation.

15. Procédé selon l'une des revendications 10 à 14, **caractérisé en ce que** l'air est alimenté à partir du circuit d'aspiration (4) en aval du compresseur (3) jusque dans la zone d'afflux (28) de la roue de compresseur (21) dans le canal d'entrée de compresseur (23).
